# EUROPEAN PATENT SPECIFICATION

(11) **EP 3 307 106 B1**
(45) Date of publication and mention of the grant of the patent: **04.08.2021**
(21) Application number: 16808413.5
(22) Date of filing: 10.06.2016
(51) Int. Cl.: A44B 11/25, B64D 17/32

(54) **BUCKLE RELEASE MECHANISM**
SCHNALLENLÖSEMECHANISMUS
MÉCANISME DE LIBÉRATION DE BOUCLE

(30) Priority: 11.06.2015 US 201514736820
(43) Date of publication of application: 18.04.2018
(73) Proprietor: Cobham Mission Systems Davenport LSS Inc., Davenport IA 52804-1203 (US)
(72) Inventor: CLARK, Robert E., Seminole, FL 33772 (US); ROEMER, Shawn, St. Petersburg, FL 33709 (US); PANDELOS, Nicholas W., Clearwater, FL 33762 (US); FORD, Brian, Bettendorf, IA 52722 (US); RALEIGH, Timothy, Long Grove, IA 52756 (US); BERKENBOSCH, Lyle, Bettendorf, IA 52722 (US); GONZALES, Ivan, Davenport, IA 52803 (US)
(74) Representative: Carpmael, Robert Maurice Charles
(86) International application number: PCT/US2016/036971
(87) International publication number: WO 2016/201287

(56) References cited:
- WO-A2-2014/036401
- US-A- 3 986 234
- US-A1- 2002 178 557
- US-A1- 2007 143 973
- US-A1- 2011 162 175
- US-A1- 2012 110 800
- US-B1- 6 205 628

## Description

### TECHNICAL FIELD

The present invention relates to a buckle, more particularly, the present invention relates to a buckle release mechanism that permits the buckle to be released while under a load.

### BACKGROUND OF THE INVENTION

Buckles and buckle release systems are frequently used to secure harnesses, safety restraints, and parachutes. Parachute harnesses, for example, include a buckle having a buckle release system for releasing the harness from the canopy of the parachute. Several different buckle release systems are known in the art,

U.S. Pat. No. 3,986,234 to Frost et al. discloses a releasable fastener for securing together two straps. A link is included for attachment to one of the straps. The link takes the form of a plate-like strike with a pair of spaced-apart locking lugs that define locking notches. The lugs cooperate with a pair of spaced-apart locking pins. Bifurcated levers secured to the upper ends of the locking pins serve to rotate the locking-pins in response to the movement of a slide. A pivotal latch is also included. The latch must be pivoted prior to moving the slide.

The buckle of Frost may suffer from the drawback that a large amount of force is needed in order to move the slide and release the parachute riser straps. The force required to move the slide dramatically increases to the extent that one or more of the straps is under tension, as may be the case when a parachute is deployed. The level of force required to move the slide may preclude a user from releasing the mechanism or may preclude the user from releasing the mechanism with one hand.

A further buckle release design is disclosed in U.S. Pat. No. 5,857,247 to Warrick et al. 'Warrick discloses a buckle release system for the manual or automatic release of a crewmember harness. This buckle has a frame that receives a cooperating tang that is secured to a portion of the harness. A tang assembly secures the buckling member in the frame. A latch that pivots between a closed position and an open position holds the tang assembly. The latch is intended to prevent the inadvertent release of the buckling member from the frame. A lever that includes a cavity holds a free end of the latch. During operation, the lever is moved to an open position in order to release the latch.

However, like other buckles, the buckle disclosed in Warrick may not open and release the harness under some difficult or extreme conditions. Failure of the buckle to open and release can be hazardous to the wearer of the harness. For example, a parachute canopy may exert a substantial force on the harness when the conditions are windy and/or when the canopy is being dragged through water. If the buckle fails to release when needed, or if the wearer is otherwise unable to activate the release, the aircraft personnel could be dragged along the ground or through water due to the force on the canopy. This could place the wearer in great danger of receiving significant bodily injury.

An additional buckle release system is disclosed in U.S. Pat. No. 6,763,557 to Clark et al. Clark discloses a buckle release system for releasing a parachute canopy from a harness. The buckle includes both a lock lever, a manual release lever, a spring biased catch and a latch positioned in a frame. A slide member is provided that operates to hold the latch in a locked position and prevents a buckling member from being released when the buckle is in a locked position. The lock lever is provided to prevent the unintended release of the manual release lever and thus a premature release of the parachute canopy from a harness.

However, the lock lever of Clark often encounters significant aerodynamic and inertial forces both before and after parachute deployment. On some occasions, these forces may cause the premature release of the lock lever. Although such an event would not, in and of itself, cause the premature release of the parachute canopy, it does reduce the available safety factor. Namely, if both the lock lever and the release lever were prematurely opened, the result could be a premature release of the canopy.

Accordingly, a need exists for a buckle with a buckle release system that can withstand and operate under difficult operating environments. There also exists a need for a buckle release system that is not prone to premature or accidental release and that can be released while under load.

WO 2014/036401 discloses a buckle release mechanism that can be used to couple together various types of straps, webbing or belts. The mechanism includes a housing with a locking mechanism. The locking mechanism employs two rotatable locking pins with associated cams and openings. An opening is formed within the housing for receiving a yoke. A striker plate with opposing lugs is formed at one end of the yoke. The lugs cooperate with the locking pins to either retain or reject the striker plate within the housing.

US 2011/162175 discloses a multiple safety belt fastening and quick release device having a housing that may be configured to receive one or more safety belt buckles. Tongues of the safety belts may be secured in the housing by a locking mechanism of the device. Each secured safety belt tongue may be associated with a locking mechanism that operates independently of other present locking mechanisms. A release mechanism may simultaneously release all secured safety belts.

### SUMMARY OF THE INVENTION

A buckle release mechanism according to the present invention is provided in Claim 1 of the appended claims.

An advantage of the present disclosure is realized by providing a buckle retaining mechanism that keeps an associated tang securely locked in difficult operating environments.

A further advantage of the present disclosure is achieved by providing a retaining mechanism that prevents the accidental or unintended release of the buckle.

Another possible advantage is attained by including a failsafe mechanism within the buckle release.

Still yet another possible advantage is achieved by reducing the force needed to release the disclosed buckle.

A further advantage is realized by providing a buckle release mechanism that can be released by the user while the release is under a load.

Various embodiments of the invention may have none, some, or all of these advantages. Other technical advantages of the present invention will be readily apparent to one skilled in the art.

### BRIEF DESCRIPTION OF THE DRAWINGS

For a more complete understanding of the present disclosure and its advantages, reference is now made to the following descriptions, taken in conjunction with the accompanying drawings, in which:
FIG. 1 is a perspective top view of an example of a buckle release mechanism not according to the present invention, but provided to assist in the understanding of the invention.
FIG. 2 is a perspective bottom view of the buckle release mechanism shown in FIG. 1.

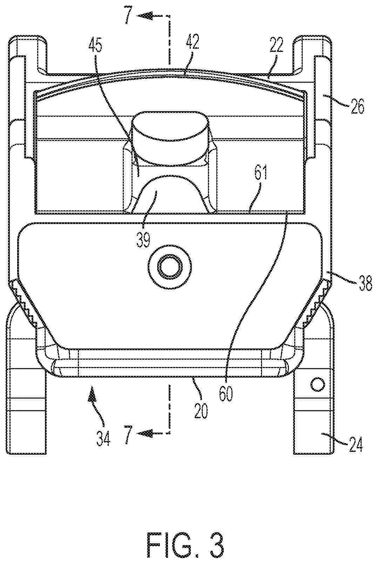

FIG. 3 is a top plan view of the buckle release shown in FIG. 1.
FIG. 4A is a top plan sectional view of the buckle release shown in FIG. 1 in the locked orientation.
FIG. 4B is a top plan sectional view of the buckle release shown in FIG. 1 in the unlocked orientation.
FIG. 5 is an exploded view of the buckle release mechanism shown in FIG. 1.
FIG. 6A is a perspective view of an embodiment of a locking mechanism used within the buckle release mechanism shown in FIG. 1. in the locked orientation.
FIG. 6B is a perspective view of the locking mechanism shown in FIG. 6A in the unlocked orientation.
FIG. 7 is a side sectional view of the locking mechanism shown in FIG. 6A.
FIG. 8 is a perspective top view of a housing of an embodiment of a buckle release mechanism in accordance with the present invention.
FIG. 9 is an exploded view of the housing of the buckle release mechanism shown in FIG. 8.
FIG. 10 is a top plan sectional view of the housing of the buckle release mechanism shown in FIG. 8 in the uncoupled orientation.
FIG. 11 is a cross sectional view of the buckle release mechanism of FIG. 8 in the uncoupled orientation.
FIG. 12 is a top plan sectional view of the buckle release mechanism of FIG. 8 in the unlocked orientation.
FIG. 13 is a cross sectional view of the buckle release mechanism of FIG. 8 in the coupled and unlocked orientation.
FIG. 14 is a top plan sectional view of the buckle release mechanism of FIG. 8 in the locked orientation.
FIG. 15 is a side sectional view of the locking mechanism of FIG. 8 in the uncoupled orientation.

Similar reference numerals refer to similar parts throughout the several views of the drawings.

### DETAILED DESCRIPTION OF THE DRAWINGS

The present invention relates to a buckle and a buckle release mechanism.

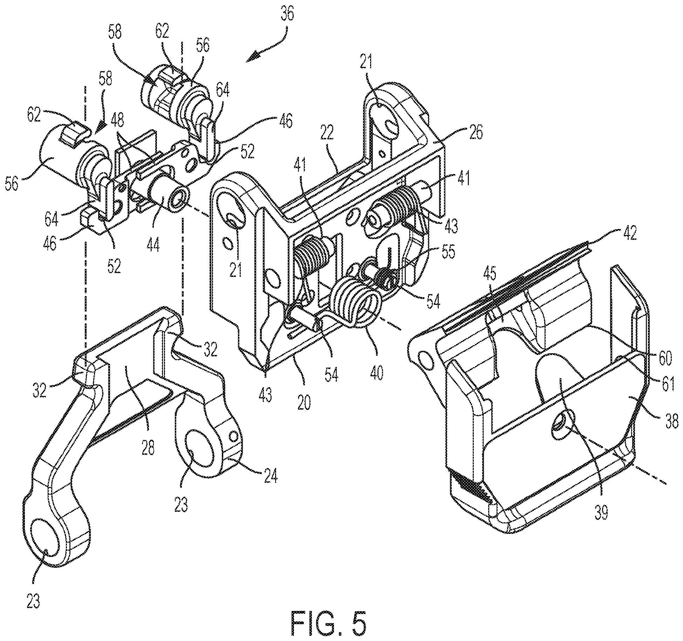

The buckle 10 includes opposing forward 20 and rearward 22 ends for coupling various types of straps, webbing or belts. In one particular example, not being part of the claimed invention but present for illustration purpose only, buckle 10 forms part of a parachute canopy for a pilot's harness. To achieve this, each end 20, 22 of the buckle is adapted to receive a roller (not shown) between opposing apertures 21, 23, respectively, defined within their respective ends. Each length of webbing has an end that is secured about one of these rollers. The forward roller extends between two ends of a removable yoke 24. The rearward roller extends between two sides of a housing 26. Each roller can be secured to the end of a length of a webbing. A striker plate 28 with opposing lugs 32 is formed at the opposite end of yoke 24 (FIG. 5). Striker plate 28 and lugs 32 are adapted to be inserted into an aperture 34 at forward end 20 of housing 26.

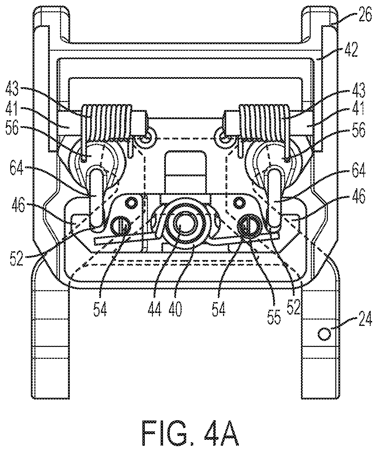

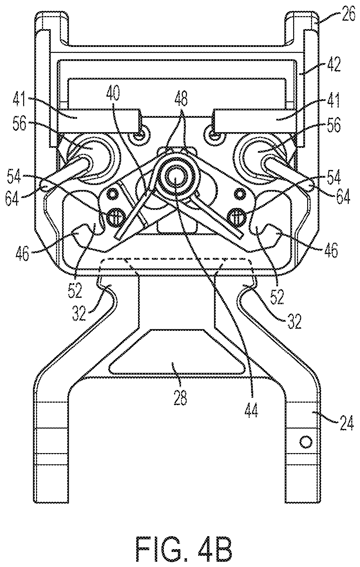

Striker plate 28 is retained in (or ejected from) housing 26 by way of a locking mechanism 36. Locking mechanism 36 is described next in conjunction with FIGS. 4 and 5. Locking mechanism 36 can be operated by the user via a slide 38 and latch 42. Slide 38 includes downwardly extending sides that are mounted over the sides of housing 26. This interconnects slide 38 to housing 26 and it also allows slide 38 to be slid between the forward and rearward ends (20 and 22, respectively) of housing 26. Slide 38 is prevented from moving towards the rearward end 22 of housing 26 by latch 42 through the interference between latch edge 60 and slide edge 61 of slide 38. Latch 42 further includes a slide tongue 39 that resides within a notched portion 45 defined by latch 42 to prevent contaminants from entering the locking mechanism 36.

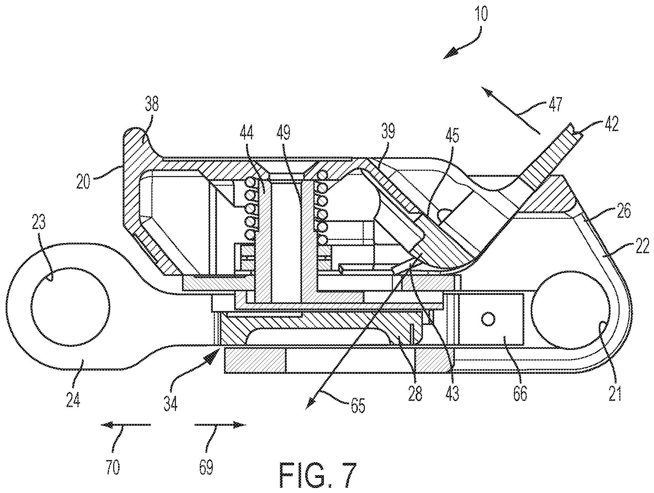

Latch 42 is pivotally coupled to housing 26 via latch pins 41 and has opened and closed positions. When latch 42 is pivoted upwardly in the direction generally indicated by arrow 47 (see FIG. 7), the bottom of the latch 42 rotates downwardly in the direction generally indicated by arrow 65. This action disengages latch edge 60 from slide edge 61, which in turn permits slide 38 to be moved rearwardly to the rearward end 22 of housing. Latch 42 is normally biased to the closed position (note FIG. 7) via a latch spring 43, thereby preventing the rearward movement of slide 38. Latch 42 can be pivoted to an opened position by overcoming the spring bias. This two part actuation (i.e., pivoting latch 42 upwardly and moving slide 38 rearwardly) avoids inadvertent release of the mechanism.

Locking mechanism 36 includes a central slide post 44 that extends through housing 26 and is coupled to slide 38 (such as, by example, a screw threaded within hole 49 shown in FIG. 7). Slide post 44 also interconnects a pair of locking levers 46. Each of the locking levers 46 includes an inner end 48 that is forked. The forked extent 48 of each locking lever 46 is positioned about slide post 44. The outer extent of each locking lever 46 defines a recess 52. Movement of slide 38 with respect to housing 26 causes a corresponding movement of slide post 44 with respect to housing 26. Movement of slide post 44, in turn, causes each of the locking levers 46 to pivot about a respective pivot point 54. A post spring 40 may be positioned about slide post 44 to urge it into a locked position (note FIG. 4A). When slide post 44 is positioned as noted in FIG. 4A, locking levers 46 are in alignment with one another. This corresponds to the locked orientation. When slide post 44 is positioned as noted in FIG. 4B, locking levers 46 are angled with respect to one another. This corresponds to the unlocked orientation.

As shown most clearly in FIG. 7, buckle 10 may further include a leaf spring 66 that may be configured to become compressed to a loaded position as striker 28 is inserted into housing 26 as a user applies a locking force in the direction generally indicated by numeral 69. Once striker 28/yoke 24 is inserted into aperture 34 and locked in place by locking levers 46 (as will be discussed in more detail below), the compressed leaf spring 66 is biased to store an unlocking force which seeks to bias movement of striker 28 in the opposing direction 70. The unlocking force is transmitted through striker 28 and is prevented from releasing due to the locking engagement of lugs 32 within cam openings 58 of locking pins 56 as described below.

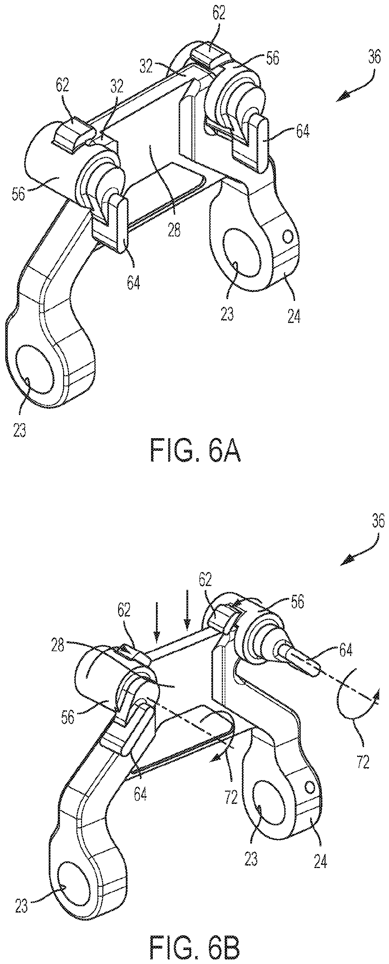

Locking mechanism 36 may further includes a pair of locking pins 56. Each of the locking pins 56 extends between an upper and lower surface of housing 26. Each pin 56 may further include an internal opening 58 (note FIG. 5). A cam 62 may be positioned adjacent each opening 58 and extend from the surface of each pin 56. A wing 64 may integrally formed at the upper end of each locking pin 56. Each of these wings 64 is adapted to be selectively retained within one of the locking lever recesses 52. When the locking levers 46 are in alignment with respect to one another, wings 64 are retained within recesses 52. This orientation is depicted in FIGS. 4A and 6A. However, when locking levers 46 are angled with respect to one another, recesses 52 rotate and clear wings 64 such that wings 64 can rotate outwardly in the direction generally indicated by arrow 72 (see FIG. 6B). This orientation is depicted in FIGS. 4B and 6B. This, in turn, causes the inward rotation of the internal openings 58 and cams 62. As described in more detail hereinafter, this unlocks and ejects striker plate 28 from housing 26. Pivot springs 55 (note FIG. 4A and 5)may be secured about the pivot points 54 to bias wings 64 to their outward orientation as shown in FIG. 4B.. While only one pivot spring 55 is shown in FIGS. 4A and 5, it should be understood by those skilled in the art that each pivot point 54 may be equipped with a respective pivot spring 55. For sake of clarity, pivot springs 55 have been omitted from the locking mechanism shown in FIG. 4B.

In use, with latch 42 pivoted upwardly, slide 38 can be moved toward the rearward end 22 of housing 26. This rearward movement of slide 38 rotates pins 56 such that openings 58 are oriented towards forward opening 34 of housing 26. Striker plate 28 can then be inserted into opening 34 of housing 26. During insertion, lugs 32 are received within the openings 58. Lugs 32 then contact cams 62 to rotate pins 56. Striker 28 may also engage leaf spring 66 thereby compressing the leaf spring to its loaded position wherein the leaf spring stores the unlocking force. When slide 38 is retracted, wings 64 are lockingly received within recesses 52 of levers 46. Striker plate 28 is now lockingly received within buckle 10. In this orientation, locking levers 46 are in alignment with one another. This is the locked orientation illustrated in FIGS. 4A and 6A.

Thereafter, if a user wishes to unlock the buckle mechanism 10, they must again pivot latch 42 upwardly against the bias of latch spring 43. With latch 42 in the pivoted position, slide 38 and be moved toward the rearward end 22 of housing 26. This rearward movement of slide 38 causes a corresponding movement of slide post 44. Slide post 44, in turn, pivots each of the locking levers 46 about the corresponding pivot points 54. As the locking levers 46 rotate, locking arm recesses 52 clear wings 64 such that pivot springs 55 can operate to rotate each of the wings 64 outwardly (with respect to the centerline of the buckle assembly). Because wings 64 are integrally connected to locking pins 56, this rotation causes a similar rotation of the two cams 62. The outward rotation of wings 64 causes the internal openings 58 to rotate inwardly. This inward rotation of the internal openings 58 permits lugs 32 of striker plate 28 to exit the locking mechanism 36. The ejection of striker plate 28 is facilitated by cams 62. Namely, the rotation of locking pins 56 causes cams 62 to contact the outer face of striker plate 28 and urge it to exit aperture 34 in housing 26 (note FIG. 6B). Further, rotation of internal openings 58 and disengagement of lugs 32 therein releases the stored bias within leaf springs 66 thereby urging striker 28 to exit aperture 34. Ultimately, this permits yoke 24 and its associated webbing to be separated from housing 26 even when a load is on yoke 24.

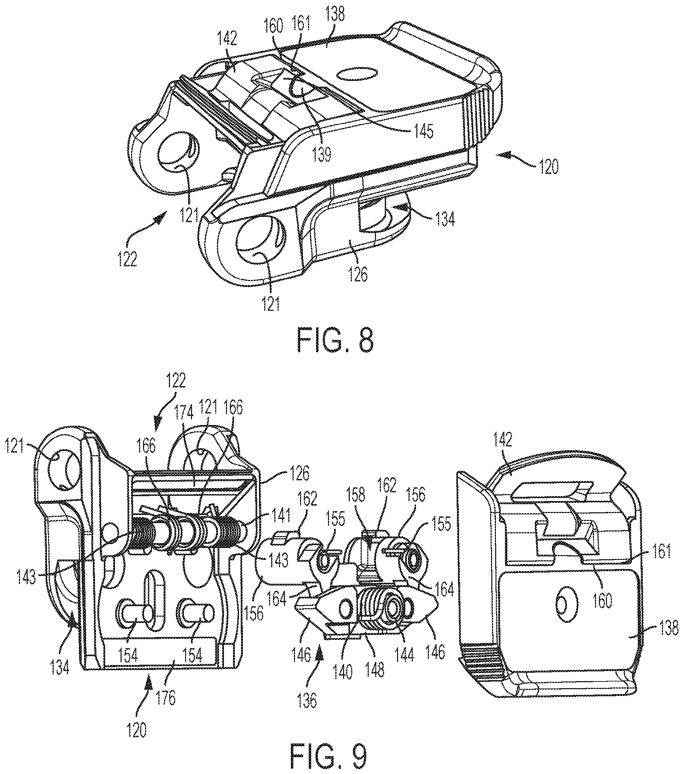

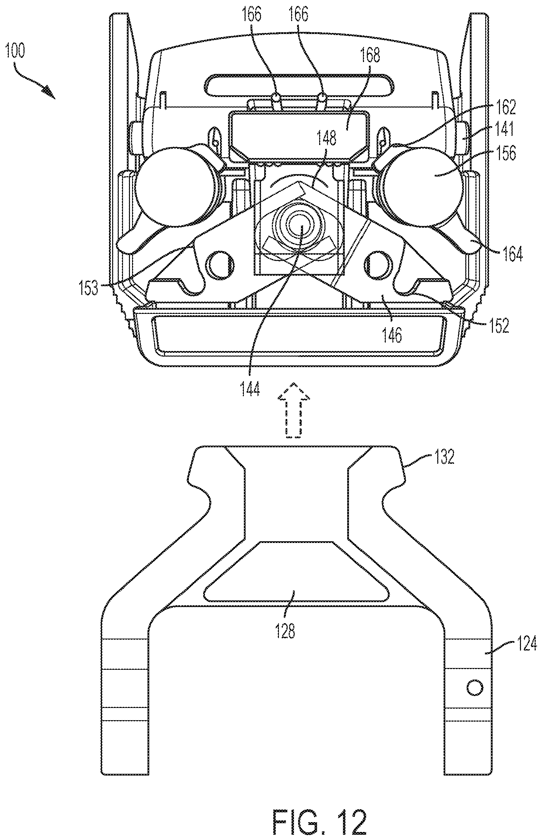

With reference to FIGS. 8-15, an embodiment of a buckle 100 generally includes opposing forward 120 and rearward 122 ends for coupling various types of straps, webbing or belts. In one particular embodiment, buckle 1.00 forms part of a parachute canopy for a pilot's harness. To achieve this, each end 120, 122 of buckle 100 is adapted to receive a roller (not shown) between opposing apertures 121, 1.23, respectively, defined within their respective ends. Each length of webbing has an end that is secured about one of these rollers. The forward roller extends between two ends of a removable yoke 124. The rearward roller extends between two sides of a housing 126. Each roller can be secured to the end of a length of a webbing. A striker plate 128 with opposing lugs 132 is formed at the opposite end of yoke 124 (FIG. 12). Striker plate 128 and lugs 132 are adapted to be inserted into an aperture 134 located at forward end 120 of housing 126.

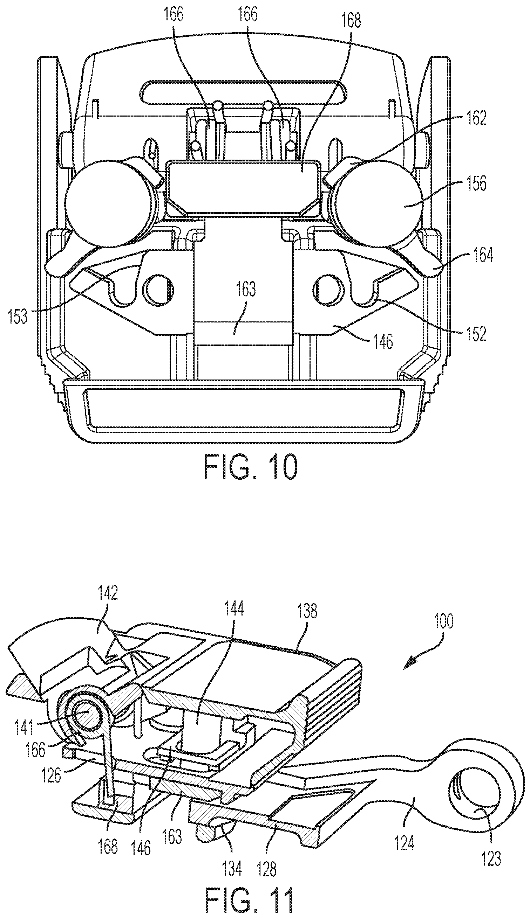

Striker plate 128 is retained in (or ejected from) housing 1.26 by way of a locking mechanism 136. Locking mechanism 136 is described next in conjunction with FIGS. 10-14. Locking mechanism 136 can be operated by the user via a slide 138 and latch 142. Slide 138 includes downwardly extending sides that are mounted over the sides of housing 126. This interconnects slide 138 to housing 126 and it also allows slide 138 to be slid between the forward and rearward ends (120 and 122, respectively) of housing 126. Slide 138 is prevented from moving towards the rearward end 122 of housing 126 by latch 142 through the interference between latch edge 160 and slide edge 161 of slide 138. Latch 142 further includes a slide tongue 139 that resides within a notched portion 145 defined by latch 142 to prevent contaminants from entering the locking mechanism 136.

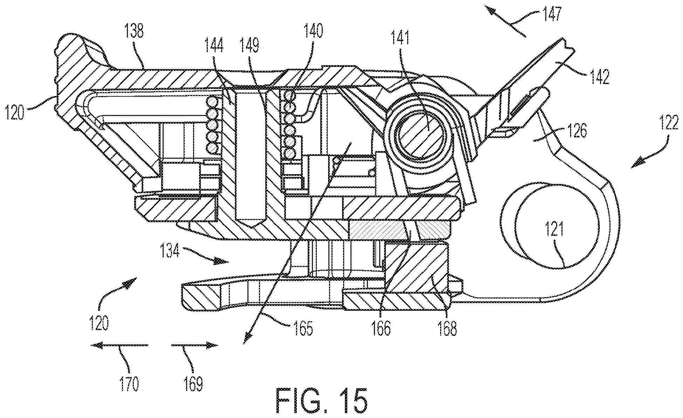

Latch 142 is pivotally coupled to housing 126 via latch pin 141 and has opened and closed positions. When latch 142 is pivoted upwardly in the direction generally indicated by arrow 147 (see FIG. 15), the bottom of the latch 142 rotates downwardly in the direction generally indicated by arrow 165. This action disengages latch edge 160 from slide edge 161, which in turn permits slide 138 to be moved rearwardly to the rearward end 122 of housing 126. Latch 142 is normally biased to the closed position (note FIG. 15) via one or more latch springs 143 (see FIG. 9), thereby preventing the rearward movement of slide 138. Latch 142 can be pivoted to an opened position by overcoming the spring bias. This two part actuation (i.e., pivoting latch 142 upwardly and moving slide 138 rearwardly) avoids inadvertent release of the mechanism.

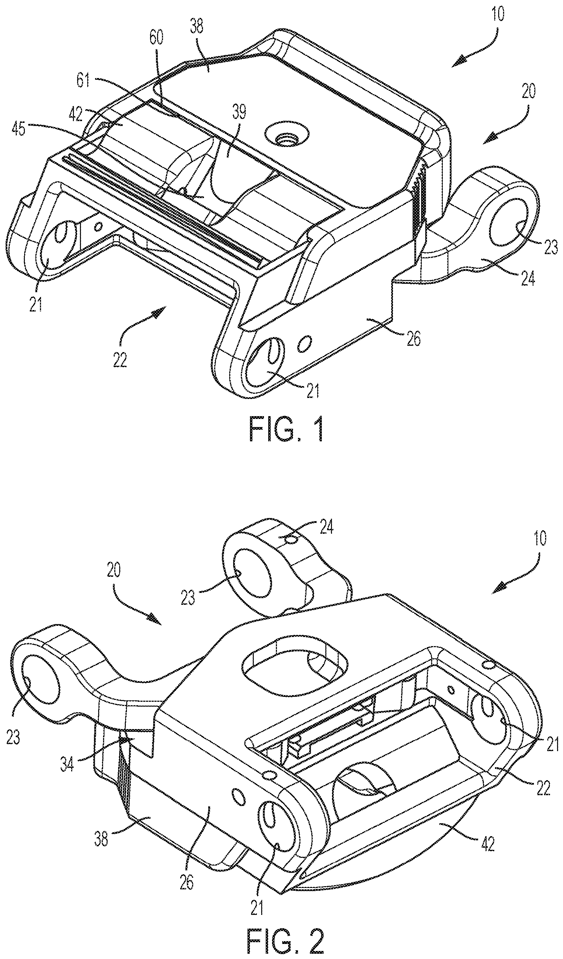

Locking mechanism 136 includes a central slide post 144 that extends through housing 126 and is coupled to slide 138 at a first end (such as, by example, a screw threaded within hole 1.49 shown in FIG. 15). The opposing end of slide post 144 may include a strike ramp 163 configured to aid sliding engagement of striker 128 into aperture 134. Slide post 144 may also interconnect a pair of locking levers 146. Each of the locking levers 146 may include an inner end 148 that is forked. The forked extent 148 of each locking lever 146 is positioned about slide post 144. The outer extent of each locking lever 1.46 defines a recess 152. Movement of slide 138 with respect to housing 126 causes a corresponding movement of slide post 144 with respect to housing 126. Movement of slide post 144, in turn, causes each of the locking levers 146 to pivot about a respective pivot point 154. A post spring 140 may be positioned about slide post 44 to urge it into a locked position (note FIG. 9). For sake of clarity, post spring 140 has been omitted from FIGS. 10-14. When slide post 144 is positioned as noted in FIG. 10, locking levers 146 are in alignment with one another. This corresponds to the locked orientation. When slide post 144 is positioned as noted in FIG. 1.2, locking levers 146 are angled with respect to one another. This corresponds to the unlocked orientation.

As shown most clearly in FIGS. 9 and 15, buckle 100 further includes one or more torsion springs 166 which may be mounted onto latch pin 141. One end of torsion spring 166 is coupled to an ejector 168, the operation of which will be discussed in further detail below. Striker 128 may be inserted into housing 126 as a user applies a locking force in the direction generally indicated by numeral 169. As striker 128/yoke 124 is inserted into aperture 134 so as to be locked in place by locking levers 1.46 (as will be discussed in more detail below), torsion springs 166 are biased to a loaded position so as to store an unlocking force which seeks to move striker 1.28 in the opposing direction 170. The unlocking force is transmitted through striker 128 and is prevented from releasing due to the locking engagement of lugs 132 within cam openings 1.58 of locking pins 1.56 as described below.

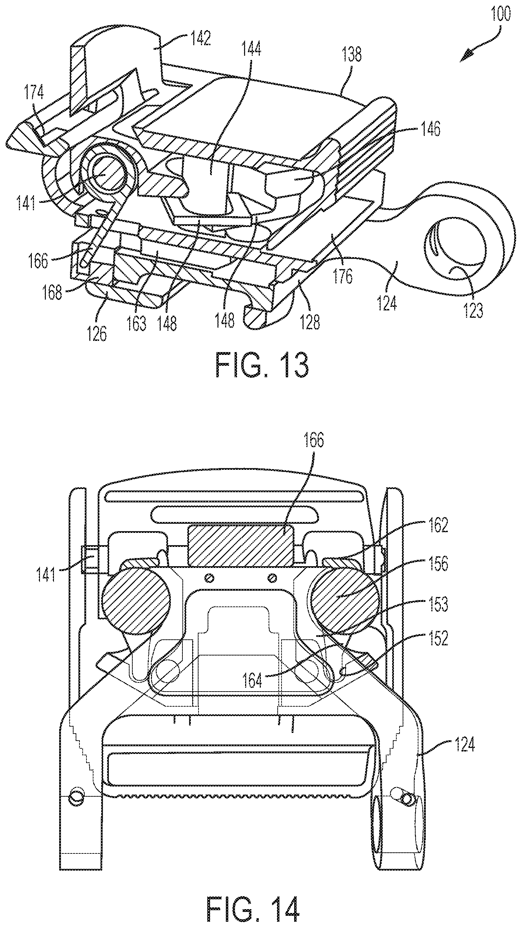

Locking mechanism 136 further includes a pair of locking pins 156. Each of the locking pins 156 extends between an upper and lower surface of housing 126. Each pin 156 further includes an internal opening 158 (note FIG. 9). A cam 162 is positioned adjacent each opening 158 and may extend from the surface of each pin 156. A wing 164 may be integrally formed at the upper end of each locking pin 156. Each of these wings 164 is adapted to be selectively retained within one of the locking lever recesses 152. When the locking levers 146 are in alignment with respect to one another, wings 164 are retained within recesses 152. This locked orientation is depicted in FIGS. 9, 10 and 14. However, when locking levers 146 are angled with respect to one another, recesses 152 rotate and clear wings 164 such that wings 164 can rotate outwardly. This unlocked orientation is depicted in FIGS. 12 and 13. This, in turn, causes the inward rotation of the internal openings 158 and cams 162. As described in more detail hereinafter, this unlocks and ejects striker plate 128 from housing 126. Each locking pin 1.56 may further include a pivot spring 155 configured to bias the locking pin in the unlocked orientation.

In use, latch 142 is pivoted upwardly in the direction generally indicated by arrow 147 (FIG. 15) so as to allow slide 138 to be moved toward the rearward end 122 of housing 126. This rearward movement of slide 138 rotates pins 156 such that openings 158 are oriented towards forward opening 134 of housing 126 (FIG. 12). Striker plate 128 may then be inserted into opening 134 of housing 126 (FIG. 13). During insertion, lugs 132 are received within the openings 158. Lugs 132 then contact cams 162 to rotate pins 156 such that pins 156 overcome the outwardly directed bias of pivot springs 155. Striker 128 also engages ejector 168 thereby driving ejector 168 rearward toward rearward end 122 of housing 126. The rearward travel of ejector 168 also loads an unlocking bias in 166 as described above. When slide 138 is retracted, i.e. slid toward forward end 120 (FIG. 14), wings 164 are lockingly received within recesses 152 of levers 146 and latch 142 is reset to its locking position by latch springs 143. Striker plate 128 is now lockingly received within buckle 100. In this orientation, locking levers 146 are in alignment with one another. This is the locked orientation illustrated in FIG. 14.

Thereafter, if a user wishes to unlock the buckle mechanism 100, pivot latch 142 is rotated upwardly (i.e. in direction 147) against the bias of latch springs 143. With latch 142 in the pivoted position, slide 138 may be moved toward the rearward end 122 of housing 126. The rearward movement of slide 138 causes a corresponding movement of slide post 144. Slide post 144, in turn, pivots each of the locking levers 146 about the corresponding pivot points 1.54. As the locking levers 146 rotate, locking arm recesses 152 clear wings 164 such that pivot springs 155 can operate to rotate each of the wings 164 outwardly (with respect to the centerline of the buckle assembly). Because wings 164 are integrally connected to locking pins 156, this rotation causes a similar rotation of the two cams 162. The outward rotation of wings 164 causes the internal openings 158 to rotate inwardly. This inward rotation of the internal openings 158 permits lugs 132 of striker plate 128 to exit the locking mechanism 136. Should locking pins 156 fail to initially rotate upon biasing of pivot springs 155, each locking lever 146 may be further configured to include a kick-out portion 153 which is proportioned to engage with wing 164 to urge the locking pins 156 to rotate. The ejection of striker plate 128 may facilitated by cams 162. Namely, the rotation of locking pins 156 causes cams 162 to contact the outer face of striker plate 128 and urge the striker plate 128 to exit aperture 134 in housing 126. Further, rotation of internal openings 158 and disengagement of lugs 132 therein releases the stored bias within torsion springs 166 such that ejector 168 urges striker plate 128 to exit aperture 134. Ultimately, this permits yoke 124 and its associated webbing to be separated from housing 126 even when a load is on yoke 124.

In a further aspect of the present invention, buckle 100 may further include locking indicators configured to communicate to a user whether the striker plate 128 has been properly secured within housing 126. By way of example, housing 126 may be configured to include one or more indicator surfaces, such as latch indicator surface 174 and slide indicator surface 176, which may signal to the user the status of buckle 100 (see FIGS. 9 and 13). That is, latch indicator surface 174 and slide indicator surface 176 may be of a different color than the remainder of buckle 100. For example, and by no means meant to be limited solely thereto, indicator surfaces 174, 176 may be a bright color, a neon color, and/or include reflectors such that these surfaces readily stand out against the other surfaces of buckle 100 and any restraints coupled thereto. In use, as latch 142 is rotated upwardly and slide 138 is moved rearwardly as described above, indicator surfaces 174, 1.76 may become visible to the user. Once striker plate 128 has been inserted into aperture 134, proper forward movement of slide 138 will cause slide 138 to occlude slide indicator surface 176 thereby signaling to the user that the slide is in the proper position. Likewise, latch 142 will return to its locked position, such as through action of latch springs 141, and thereby occlude latch indicator surface 174. Proper latching of the buckle occurs only when both indicator surfaces are blocked from view. [lone or both surfaces may be seen by the user, the buckle is not securely fastened and inadvertent or untimely unbuckling may result should a sufficient opposing force be applied to housing 126 and striker plate 128.

The above description of an example embodiment does not define or constrain this disclosure. Other changes, substitutions, and alterations are also possible without departing from the scope of this disclosure only defined by the following claims.

## Claims

1. A buckle mechanism (100) comprising:
a housing (126) with forward (120) and rearward (122) ends, an opening formed within the forward end (120) of the housing (126);
a slide (138) secured over the housing (126) and adapted for movement between locked and unlocked positions;
a pair of locking pins (156) rotatably positioned within the housing, each of the locking pins (156) including an internal opening (158) and a cam (162) positioned adjacent the internal opening, each locking pin (156) having locked and unlocked orientations, with movement of the slide (138) in a first direction bringing the locking pins (156) into the unlocked orientation and movement of the slide (138) in an opposing second direction bringing the locking pins (156) into the locked orientation; and
a striker plate (128) having an outer face including opposing lugs (132), wherein the lugs (132) are lockingly received within the internal openings (158) of the locking pins (156) when the locking pins (156) are in the locked orientation, and wherein the lugs (132) are ejected from the internal openings (158) by urging engagement of the cams (162) against the outer face of the striker plate (128) when the locking pins (156) are rotated to the unlocked orientation; and
an ejector (168) being an ejector block coupled to the housing (126), wherein the ejector (168) is coupled to a torsion spring (166) which is biased to a loaded position when the lugs (132) are lockingly received within the internal openings (158) of the locking pins (156) when the locking pins (156) are in the locked orientation, wherein, when the locking pins (156) are rotated to the unlocked orientation the bias stored within the torsion spring (166) is released whereby the ejector (168) is urged to an unloaded position thereby ejecting the lugs (132) from the internal openings (158) of the locking pins.

2. The buckle mechanism (100) according to claim 1, further comprising:
a slide post (144) secured to the slide (126) and adapted for movement with the slide (126) between the locked and unlocked positions;
a pair of locking levers (146) pivotally positioned within the housing (126), each locking lever (146) having a first end (148), a second recessed end (152), and a pivot point (154) therebetween, each of the first ends (148) being interconnected to the slide post (144), whereby movement of the slide (138) and slide post (144) between the unlocked and locked positions causes each of the locking levers (146) to pivot about its respective pivot point (154);
wherein, the pair of locking pins (156) are independently rotatable relative to the locking levers (146), each of the locking pins (156) including a wing (164), wherein the locked and unlocked orientations of the locking pins (156) are corresponding to the locked and unlocked positions of the slide post (144), the wings (164) being positioned within the recessed ends (152) of the locking levers (146) when the locking pins (156) are in the locked position, the wings (164) being ejected from the recessed ends (152) of the locking levers (146) when the locking levers (146) are pivoted to the unlocked position and the locking pins (156) are rotated to the unlocked orientation; and
wherein, when the lugs (132) are being retained within the internal openings (158) of the locking pins (156), the slide (138) and slide post (144) are in the locked position.

3. The buckle mechanism as described in claim 2 further comprising a latch (142) pivotally secured to the housing, the latch having opened and closed positions, wherein the latch (142) must be in the opened position in order for the slide to be moved to the unlocked position.

4. The buckle mechanism as described in claim 3 wherein the first end of each locking lever (146) is forked and wherein the adjacent forks are positioned about the slide post (144).

5. The buckle mechanism as described in claim 2 further comprising a cam (162) adjacent the internal opening (158) of each locking pin, wherein moving the slide (138) and slide post (144) into the unlocked position causes the locking pins (156) to rotate to the unlocked orientation thereby urging the cams against the striker plate (128) such that the lugs are ejected from the internal openings of the locking pins.

6. The buckle mechanism as described in claim 2 wherein the striker plate (128) includes a yoke that is interconnected to the restraint.

7. The buckle mechanism of claim 3 wherein the housing includes one or more indicator surfaces configured to communicate to a user whether the striker plate (128) has been properly secured within the housing (126).

8. The buckle mechanism of claim 7 wherein the housing (126) includes a latch indicator surface and a slide indicator surface wherein the slide indicator surface is occluded by the slide (138) when the slide (138) is in the locked position and wherein the latch indicator surface is occluded by the latch when the latch is in the closed position.

9. The buckle mechanism as described in claim 2 wherein each locking lever (146) includes a kick-out portion configured to engage the wing (164) to urge the locking pin (156) to rotate to the unlocked orientation when the slide (138) and slide post (142) are moved to the unlocked position.

10. The buckle mechanism as described in claim 2 further comprising a respective pivot spring (155) coupled to each locking pin (156), the pivot spring (155) configured to bias the locking pin (156) in the unlocked orientation.

## Patentansprüche

1. Schnallenmechanismus (100), umfassend:
ein Gehäuse (126) mit einem vorderen (120) und einem hinteren (122) Ende, wobei eine Öffnung innerhalb des vorderen Endes (120) des Gehäuses (126) geformt ist;
einen Schieber (138), welcher über dem Gehäuse (126) befestigt ist und angepasst ist, um eine Bewegung zwischen einer verriegelten und einer entriegelten Position auszuführen;
ein Paar von Verriegelungsbolzen (156), welche innerhalb des Gehäuses drehbar angeordnet sind, wobei jeder der Verriegelungsbolzen (156) eine innere Öffnung (158) und einen Nocken (162) einschließt, welcher an der inneren Öffnung angrenzt, wobei jeder Verriegelungsbolzen (156) verriegelte und entriegelte Ausrichtungen aufweist, wobei eine Bewegung des Schiebers (138) in einer ersten Richtung die Verriegelungsbolzen (156) in die entriegelte Ausrichtung führt und eine Bewegung des Schiebers (138) in einer entgegengesetzten zweiten Richtung die Verriegelungsbolzen (156) in die verriegelte Ausrichtung führt; und
eine Prallplatte (128), welche eine äußere Fläche mit gegenüberliegenden Zapfen (132) aufweist, wobei die Zapfen (132) innerhalb der inneren Öffnungen (158) der Verriegelungsbolzen (156) verriegelnd aufgenommen sind, wenn die Verriegelungsbolzen (156) sich in der verriegelten Ausrichtung befinden, und wobei die Zapfen (132) von den inneren Öffnungen (158) ausgestoßen werden, indem die Nocken (162) gegen die äußere Fläche der Prallplatte (128) in Eingriff gedrückt werden, wenn die Verriegelungsbolzen (156) in die entriegelte Ausrichtung gedreht werden; und
einen Ejektor (168), welcher ein Ejektorblock ist, der mit dem Gehäuse (126) gekoppelt ist, wobei der Ejektor (168) mit einer Torsionsfeder (166) gekoppelt ist, welche in einer gespannten Position vorgespannt ist, wenn die Zapfen (132) innerhalb der inneren Öffnungen (158) der Verriegelungsbolzen (156) verriegelnd aufgenommen sind, wenn die Verriegelungsbolzen (156) sich in der verriegelten Ausrichtung befinden, wobei, wenn die Verriegelungsbolzen (156) in die entriegelte Ausrichtung gedreht werden, die Vorspannung, die in der Torsionsfeder (166) gespeichert ist, gelöst wird, wodurch der Ejektor (168) in eine entspannte Position gedrückt wird, wodurch die Zapfen (132) von den inneren Öffnungen (158) der Verriegelungsbolzen ausgestoßen werden.

2. Schnallenmechanismus (100) nach Anspruch 1, ferner umfassend:
einen Schieberpfosten (144), welcher an dem Schieber (126) befestigt ist und angepasst ist, um sich mit dem Schieber zwischen der verriegelten und der entriegelten Position zu bewegen;
ein Paar von Verriegelungshebeln (146), welche innerhalb des Gehäuses (126) schwenkbar angeordnet sind, wobei jeder Verriegelungshebel (146) ein erstes Ende (148), ein zweites vertieftes Ende (152) und einen Schwenkpunkt (154) dazwischen aufweist, wobei jedes der ersten Enden (148) mit dem Schieberpfosten (144) verbunden ist, wodurch eine Bewegung des Schiebers (138) und des Schieberpfostens (144) zwischen der entriegelten und der verriegelten Position veranlasst, dass jeder der Verriegelungshebel (146) um seinen entsprechenden Schwenkpunkt (154) schwenkt;
wobei das Paar von Verriegelungsbolzen (156) unabhängig relativ zu den Verriegelungshebeln (146) drehbar ist, wobei jeder der Verriegelungsbolzen (156) einen Flügel (164) umfasst, wobei die verriegelte und entriegelte Ausrichtung der Verriegelungsbolzen (156) der verriegelten und entriegelten Position des Schieberpfostens (144) entsprechen, wobei die Flügel (164) innerhalb der vertieften Enden (152) der Verriegelungshebel (146) angeordnet sind, wenn die Verriegelungsbolzen (156) sich in der verriegelten Position befinden, wobei die Flügel (164) von den vertieften Enden (152) der Verriegelungshebel (146) ausgestoßen werden, wenn die Verriegelungshebel (146) in die entriegelte Position geschwenkt werden und die Verriegelungsbolzen (156) in die entriegelte Ausrichtung gedreht werden; und
wobei, wenn die Zapfen (132) innerhalb der inneren Öffnungen (158) der Verriegelungsbolzen (156) zurückgehalten werden, der Schieber (138) und der Schieberpfosten (144) sich in der verriegelten Position befinden.

3. Schnallenmechanismus nach Anspruch 2, ferner umfassend einen Riegel (142), welcher schwenkbar an dem Gehäuse befestigt ist, wobei der Riegel eine offene und eine geschlossene Position aufweist, wobei der Riegel (142) in der offenen Position sein muss, damit der Schieber in die entriegelte Position bewegt werden kann.

4. Schnallenmechanismus nach Anspruch 3, wobei das erste Ende jedes Verriegelungshebels (146) gabelförmig ist und wobei die angrenzenden Gabeln um den Schieberpfosten (144) angeordnet sind.

5. Schnallenmechanismus nach Anspruch 2, ferner umfassend einen Nocken (162), welcher an der inneren Öffnung (158) jedes Verriegelungsbolzens angrenzt, wobei eine Bewegung des Schiebers (138) und des Schieberpfostens (144) in die entriegelte Position veranlasst, dass die Verriegelungsbolzen (156) in die entriegelte Ausrichtung drehen, wodurch die Nocken gegen die Prallplatte (128) gedrückt werden, derart, dass die Zapfen von den inneren Öffnungen der Verriegelungsbolzen ausgestoßen werden.

6. Schnallenmechanismus nach Anspruch 2, wobei die Prallplatte (128) ein Joch umfasst, welches mit der Zurückhaltung verbunden ist.

7. Schnallenmechanismus nach Anspruch 3, wobei das Gehäuse eine oder mehrere Anzeigeflächen umfasst, welche konfiguriert sind, um einen Benutzer darüber zu informieren, ob die Prallplatte (128) ordnungsgemäß innerhalb des Gehäuses (126) befestigt worden ist.

8. Schnallenmechanismus nach Anspruch 7, wobei das Gehäuse (126) eine Riegelanzeigefläche und eine Schieberanzeigefläche einschließt, wobei die Schieberanzeigefläche durch den Schieber (138) gedeckt ist, wenn der Schieber (138) sich in der verriegelten Position befindet und wobei die Riegelanzeigefläche durch den Riegel gedeckt ist, wenn der Riegel sich in der geschlossenen Position befindet.

9. Schnallenmechanismus nach Anspruch 2, wobei jeder Verriegelungshebel (146) einen Ausstoßabschnitt umfasst, welcher konfiguriert ist, um mit dem Flügel (164) einzugreifen, um den Verriegelungsbolzen (156) zum Drehen in die entriegelte Ausrichtung zu zwingen, wenn der Schieber (138) und der Schieberpfosten (142) in die entriegelte Position bewegt werden.

10. Schnallenmechanismus nach Anspruch 2, ferner umfassend eine entsprechende Schwenkfeder (155), welche mit jedem Verriegelungsbolzen (156) gekoppelt ist, wobei die Schwenkfeder (155) konfiguriert ist, um den Verriegelungsbolzen (156) in die entriegelte Ausrichtung vorzuspannen.

## Revendications

1. Mécanisme de boucle (100) comprenant :
un logement (126) avec des extrémités vers l'avant (120) et vers l'arrière (122), une étant ouverture formée dans l'extrémité avant (120) du logement (126) ;
une coulisse (138) fixée sur le logement (126) et adaptée pour un déplacement entre une position verrouillée et déverrouillée ;
une paire de broches de verrouillage (156) positionnées de manière rotative dans le logement, chacune des broches de verrouillage (156) incluant une ouverture interne (158) et une came (162) positionnée de manière adjacente à l'ouverture interne, chaque broche de verrouillage (156) présentant une orientation verrouillée et non verrouillée, avec un mouvement de la coulisse (138) dans une première direction amenant les broches de verrouillage (156) dans l'orientation déverrouillée et un mouvement de la coulisse (138) dans une seconde direction opposée amenant les broches de verrouillage (156) dans l'orientation verrouillée ; et
une plaque de percuteur (128) présentant une face extérieure incluant des ergots opposés (132), dans lequel les ergots (132) sont reçus de manière verrouillable dans les ouvertures internes (158) des broches de verrouillage (156) quand les broches de verrouillage (156) sont dans l'orientation verrouillée, et dans lequel les ergots (132) sont éjectés des ouvertures internes (158) en poussant la prise des cames (162) contre la face extérieure de la plaque de percuteur (128) quand les broches de verrouillage (156) tournent dans l'orientation déverrouillée ; et
un éjecteur (168) qui est un bloc éjecteur couplé au logement (126), dans lequel l'éjecteur (168) est couplé à un ressort de torsion (166) qui est sollicité vers une position chargée quand les ergots (132) sont reçus en verrouillage dans les ouvertures internes (158) des broches de verrouillage (156) quand les broches de verrouillage (156) sont dans l'orientation verrouillée, dans lequel, quand les broches de verrouillage (156) sont tournées dans l'orientation déverrouillée, la sollicitation stockée dans le ressort de torsion (166) est relâchée moyennant quoi l'éjecteur (168) est poussé dans la position déchargée en éjectant ainsi les ergots (132) des ouvertures internes (158) des broches de verrouillage.

2. Mécanisme de boucle (100) selon la revendication 1, comprenant en outre :
un montant de coulisse (144) fixé à la coulisse (126) et adapté pour un déplacement avec la coulisse (126) entre la position verrouillée et déverrouillée ;
une paire de leviers de verrouillage (146) positionnés de manière pivotante dans le logement (126), chaque levier de verrouillage (146) présentant une première extrémité (148), une seconde extrémité creuse (152), et un point de pivot (154) entre elles, chacune des premières extrémités (148) étant interconnectée avec le montant de coulisse (144), moyennant quoi un mouvement de la coulisse (138) et du montant de coulisse (144) entre la position déverrouillée et verrouillée amène chacun des leviers de verrouillage (146) à pivoter autour de son point de pivot (154) respectif;
dans lequel la paire de broches de verrouillage (156) sont indépendamment rotatives relativement aux leviers de verrouillage (146), chacune des broches de verrouillage (156) incluant une aile (164), dans lequel l'orientation verrouillée et déverrouillée des broches de verrouillage (156) correspond à la position verrouillée et déverrouillée du montant de coulisse (144), les ailes (164) étant positionnées dans les extrémités creuses (152) des leviers de verrouillage (146) quand les broches de verrouillage (156) sont dans la position verrouillée, les ailes (164) étant éjectées des extrémités creuses (152) des leviers de verrouillage (146) quand les leviers de verrouillage (146) pivotent dans la position déverrouillée et les broches de verrouillage (156) tournent dans l'orientation déverrouillée ; et
dans lequel, quand les ergots (132) sont retenus dans les ouvertures internes (158) des broches de verrouillage (156), la coulisse (138) et le montant de coulisse (144) sont dans la position verrouillée.

3. Mécanisme de boucle selon la revendication 2, comprenant en outre un verrou (142) fixé en pivotement au logement, le verrou présentant une position ouverte et fermée, dans lequel le verrou (142) doit être dans la position ouverte afin que la glissière puisse être déplacée dans la position déverrouillée.

4. Mécanisme de boucle selon la revendication 3, dans lequel la première extrémité de chaque levier de verrouillage (146) est fourchue et dans lequel les fourches adjacentes sont positionnées autour du montant de coulisse (144).

5. Mécanisme de boucle selon la revendication 2, comprenant en outre une came (162) adjacent à l'ouverture interne (158) de chaque broche de verrouillage, dans lequel un déplacement de la coulisse (138) et du montant de coulisse (144) dans la position déverrouillée amène les broches de verrouillage (156) à tourner dans l'orientation déverrouillée en poussant ainsi les cames contre la plaque de percuteur (128) de sorte que les ergots soient éjectés des ouvertures internes des broches de verrouillage.

6. Mécanisme de boucle selon la revendication 2, dans lequel la plaque de percuteur (128) inclut une traverse qui est interconnectée à la retenue.

7. Mécanisme de boucle selon la revendication 3, dans lequel le logement inclut une ou plusieurs surfaces d'indicateur configurées pour communiquer à un utilisateur si la plaque de percuteur (128) a été convenablement fixée dans le logement (126).

8. Mécanisme de boucle selon la revendication 7, dans lequel le logement (126) inclut une surface d'indicateur de verrou et une surface d'indicateur de coulisse dans lequel la surface d'indicateur de coulisse est obstruée par la coulisse (138) quand la coulisse (138) est dans la position verrouillée et dans lequel la surface d'indicateur de verrou est obstruée par le verrou quand le verrou est dans la position fermée.

9. Mécanisme de boucle selon la revendication 2, dans lequel chaque levier de verrouillage (146) inclut une partie d'expulsion configurée pour mettre en prise l'aile (164) afin de pousser la broche de verrouillage (156) afin qu'elle tourne dans l'orientation déverrouillée quand la coulisse (138) et le montant de la coulisse (142) sont déplacés dans la position déverrouillée.

10. Mécanisme de boucle selon la revendication 2, comprenant en outre un ressort de pivot (155) respectif couplé à chaque broche de verrouillage (156), le ressort de pivot (155) étant configuré pour solliciter la broche de verrouillage (156) dans l'orientation déverrouillée.
